Europäisches Patentamt

European Patent Office

Office européen des brevets

(11) Publication number: **0 269 171 B1**

# EUROPEAN PATENT SPECIFICATION

(45) Date of publication of patent specification: **12.06.91** (51) Int. Cl.5: **B01J 8/12,** //C07B31/00,
C07B33/00,C07B35/00,
(21) Application number: **87202196.9** C07B35/02,C07B35/04,
C07B37/00,C07B41/00,
(22) Date of filing: **10.11.87** C10G35/12,C10G49/14

(54) Reactor for exothermic and endothermic catalytic reactions.

(30) Priority: **21.11.86 GB 8627897**

(43) Date of publication of application:
**01.06.88 Bulletin 88/22**

(45) Publication of the grant of the patent:
**12.06.91 Bulletin 91/24**

(84) Designated Contracting States:
**DE FR GB NL**

(56) References cited:
**DE-B- 2 165 266          US-A- 2 506 122**
**US-A- 2 537 472          US-A- 2 936 221**
**US-A- 2 967 878          US-A- 3 799 866**
**US-A- 3 882 015          US-A- 3 978 150**
**US-A- 4 110 081          US-A- 4 233 268**
**US-A- 4 321 234          US-A- 4 595 567**

**PATENT ABSTRACTS OF JAPAN, vol. 5, no.
111 (C-63)[783], 18th July 1981;**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Sie, Swan Tiong
Badhuisweg 3
NL-1031 CM Amsterdam(NL)**

(74) Representative: **Aalbers, Onno et al
P.O. Box 302
NL-2501 CH The Hague(NL)**

**Description**

The invention is related to a reactor suitable for exothermic and endothermic catalytic reactions comprising:

(a) a closed reactor shell;

(b) within said reactor shell two coaxial essentially vertical cylinders enclosing a catalyst space, the walls of said cylinders having a plurality of openings of sufficiently small dimensions so as to retain the catalyst in said space, whilst allowing passage of process fluid;

(c) heat transfer means consisting of one or more tubes extending in the catalyst space, through which heat transfer fluid can be passed;

(d) one or more inlet ports for reactants and one or more outlet ports for reactor effluent, so positioned as to make the reactants pass substantially in a radial direction through the catalyst space.

Such a reactor is known from US Patent 4,321,234. However, this known reactor is meant to be used for exothermic reactions only, for which purpose the heat transfer means operate as cooling means.

Apart from this aspect, the known reactor presents the problem that it can only accomodate a fixed reactor bed. For many exothermic and endothermic catalytic reactions, however, there is a need to counteract the effect of catalyst deactivation by replacement of deactivated catalyst by the fresh one, without interrupting the process flow.

It is therefore an object of the present invention to solve this problem. Therefore, the reactor of the invention is characterized in that the reactor shell is further provided with catalyst inlet and outlet means in communication with the upper and lower ends of the catalyst space respectively, thus enabling the catalyst to move continuously through said catalyst space during operation of the reactor and wherein the heat transfer means consist of one or more coaxial pairs of an inner and an outer tube, which at their one end are connected to a heat transfer fluid inlet and outlet respectively, while at their other end the outer tube is closed and the inner tube is open and remains clear of the closed end of the outer tube.

Thus, processes can be carried out which make use of a moving catalyst bed, i.e. a catalyst mass that moves continuously through the catalyst space.

Moving bed processes have the advantage that they can operate under highly constant conditions of temperature, pressure, flow rate, catalyst properties, etc. The catalyst can be periodically introduced and withdrawn without interruption of the process flow.

Processes envisaged to be carried out using the reactor of the present invention comprise both processes in which exothermic reactions occur, like various oxidation, oxychlorination, hydrogenation, hydrocracking, synthesis gas conversion, methanol conversion, polymerization and alkylation processes, and processes in which endothermic reactions occur like dehydrogenation, catalytic reforming and aromatisation processes.

Said endothermic reactions mostly take place at temperatures well above 450 °C, which may give rise to considerable thermal expansion in the equipment.

The inventive construction suitably copes with such thermal expansion by employing heat transfer means consisting of one or more coaxial pairs of an inner and an outer tube, which at their one end are connected to a heat transfer fluid inlet and outlet respectively, while at their other end the outer tube is closed and the inner tube is open and remains clear of the closed end of the outer tube.

An advantageous embodiment of the invention employs catalyst inlet means which comprise means to distribute the catalyst over the cross section of the catalyst bed. Such means comprise a number of sloping tubes which branch off from the catalyst inlet of the reactor, which tubes lead the catalyst to different parts of the upper cross section of the catalyst space.

Another advantageous embodiment of the invention employs catalyst outlet means which comprise catalyst collection means. Such means may comprise one or more conical scoops optionally combined with a number of tubes and a collection vessel to combine catalyst from different parts of the bottom cross section of the catalyst space.

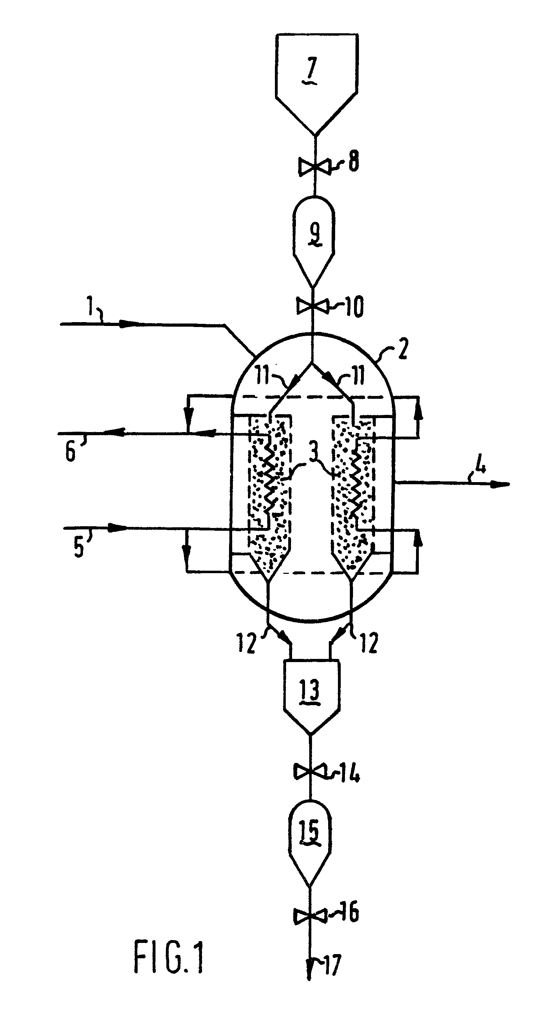

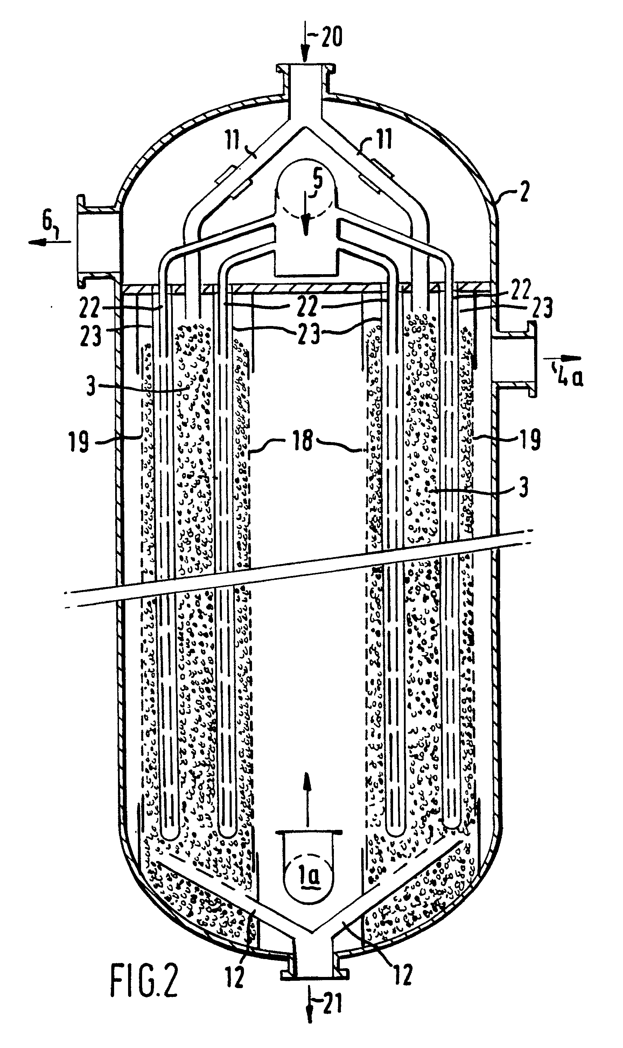

The invention will now be described by way of example in more detail with reference to the accompanying drawings, in which Fig. 1 shows a schematic diagram of a reactor system of the present invention, and in which Fig. 2 shows a longitudinal section of an embodiment of the reactor according to the invention.

Referring to Fig. 1, this represents schematically a reactor system comprising a radial-flow isothermal moving bed reactor with provisions for introduction and withdrawal of catalyst during operation without interruption of the process flow.

The reactor consists of a vertically mounted cylindrical vessel 2, in which there are two coaxial cylindrical walls of a material which is permeable to fluids but not to catalyst particles, so that the latter are kept in the annular space 3 between the cylindrical walls to form a catalyst bed. In the catalyst bed a heating or cooling surface is provided in such a way that it does not interfere with the downward flow of the catalyst particles by gravity. The heat transfer at this surface is performed by means of a heat transfer medium that is fed through an inlet line 5 and withdrawn through an outlet line 6. A storage vessel 7 is provided to store fresh or regenerated catalyst, which vessel can also function as a surge hopper or a disengaging vessel in case the catalyst is brought in from outside via a pneumatic transport system (not shown). The reactor is further provided with means which advantageously allow periodic introduction and withdrawal of portions of catalyst without interrupting the process flow, which means consist of a lock hopper to overcome the pressure differential between the catalyst entry point and the reactor, means 11 to distribute the introduced catalyst over the cross section at the top of the annular catalyst bed, a collection system 12 to collect catalyst from different parts of the cross section at the bottom of the catalyst bed and a lock hopper to advantageously overcome the pressure differential between the reactor and the catalyst exit point. The lock hopper at the entry of the reactor consists of a vessel 9 for temporary storage of portions of catalyst provided with valves 8 and 10 at its inlet and outlet respectively. Similarly, the lock hopper at the exit of the reactor consists of a vessel 15 and valves 14 and 16. A further advantage is achieved when the combination of valves 8 and 10 and/or the combination of valves 14 and 16 is/are automatically controlled. Between the reactor and the lock hopper at the exit of the reactor a collector vessel 13 is provided. A line 17 is provided to transport spent catalyst to a receiving system (not shown for reasons of clarity). The reactor is further provided with lines 1 and 4, through which process fluid can enter and leave the reactor shell, respectively.

Referring to Fig. 2, this represents an embodiment of the reactor of Fig. 1 comprising the vessel 2, within which are positioned two essentially vertical cylinders 18 and 19 enclosing the catalyst space 3. Catalyst can be continuously supplied through an inlet 20 and leave the reactor through an outlet 21. A number of sloping tubes 11 ensure uniform distribution of the catalyst over the catalyst space 3. At the bottom of the catalyst space 3 the collection means 12 are installed to collect the catalyst particles and to direct them to the outlet 21. The collection means may advantageously consist of one or more conical scoops optionally combined with a number of tubes and a collection vessel positioned near the bottom of the catalyst space. An inlet port 1a is installed inside the cylinder 18 and an outlet port 4a outside the cylinder 19 to ensure the flow of reactants to take place radially in outward direction. The heat transfer to the catalyst bed can be controlled by means of a plurality of coaxial pairs of inner tubes 22 and outer tubes 23, which at their one end are connected to a heat transfer fluid inlet and outlet respectively, while at their other end the outer tubes are closed and the inner tubes are open and remain clear of the closed end of the outer tubes, so that through the pairs of tubes a heat transfer fluid can flow in countercurrent. The heat transfer fluid can be introduced through the inlet 5 and can leave the reactor through the outlet 6.

The operation of the reactor system is as follows.

The process fluid constituting the reactor feed is introduced into the reactor shell, where it passes from the inner central part of the annular catalyst bed through the catalyst bed in a radial direction toward the circumference, where it leaves the reactor. Dependent on the type of reaction which is carried out, heating or cooling fluid is passed through the array of heat transfer tubes situated within the catalyst bed. Portions of fresh or regenerated catalyst are introduced into the lock hopper vessel by temporarily opening its inlet valve and, after pressure equalisation, introduced into the reactor system by temporarily opening the lock hopper outlet valve. The catalyst is distributed over the cross section of the bed through the distributor tubes. At the bottom part of the bed, the catalyst is led through the collector tubes to the collector vessel, from where the catalyst exits into the lock hopper vessel via its inlet valve. While the latter is closed, the catalyst is withdrawn via the outlet valve into the receiving system. As portions of catalyst are withdrawn from the bottom part of the catalyst bed, the bed slumps down by gravity, thus making room at the top for introduction of a new portion of fresh or regenerated catalyst. The volume of the individual portions of catalyst can be controlled by installing an additional small control hopper, not shown in the Figures, after the reactor in the catalyst outlet line, the volume of which control hopper fixes the amount of catalyst withdrawn at a time. The frequency of operating the valves of the lock hopper near the exit of the reactor then determines the average flow of catalyst. Another means of controlling the rate of catalyst flow is to install a rotary star valve after the reactor in the catalyst outlet line, in which case the flow rate is determined by the rotating speed of this valve. This system results in a continuous downward flow of catalyst through the bed.

It will be appreciated that advantageously the valves are of a type that allows smooth flow of catalyst through them by gravity, e.g. ball valves, and are automatically activated according to a controlled sequence, e.g. using an electronic controller.

The lock hopper vessels have advantageously a conically shaped bottom to prevent dead zones to occur and to allow smooth withdrawal of the catalyst.

It will further be appreciated that the reactor of the invention can have any size and dimensions suitable for the purpose.

Various modifications of the present invention will become apparent to those skilled in the art from the foregoing. Such modifications are intended to fall within the scope of the appended claims.

## Claims

1. A reactor suitable for exothermic and endothermic catalytic reactions comprising:
   (a) a closed reactor shell;
   (b) within said reactor shell two coaxial essentially vertical cylinders enclosing a catalyst space, the walls of said cylinders having a plurality of openings of sufficiently small dimensions so as to retain the catalyst in said space, whilst allowing passage of process fluid;
   (c) heat transfer means consisting of one or more tubes extending in the catalyst space, through which heat transfer fluid can be passed;
   (d) one or more inlet ports for reactants and one or more outlet ports for reactor effluent, so positioned as to make the reactants pass substantially in a radial direction through the catalyst space;
   characterized in that the reactor shell is further provided with catalyst inlet and outlet means in communication with the upper and lower ends of the catalyst space respectively, thus enabling the catalyst to move continuously through said catalyst space during operation of the reactor and wherein the heat transfer means consist of one or more coaxial pairs of an inner and an outer tube, which at their one end are connected to a heat transfer fluid inlet and outlet respectively, while at their other end the outer tube is closed and the inner tube is open and remains clear of the closed end of the outer tube.

2. The reactor as claimed in claim 1, characterized in that the catalyst inlet means comprise catalyst distribution means consisting of a number of sloping tubes which branch off from the catalyst inlet of the reactor, which tubes lead the catalyst to different parts of the upper cross section of the catalyst space.

3. The reactor as claimed in any one of claims 1-2, characterized in that the catalyst outlet means comprise catalyst collection means consisting of one or more conical scoops optionally combined with a number of tubes and a collection vessel positioned near the bottom of the catalyst space.

4. The reactor as claimed in any one of claims 1-3, characterized in that the catalyst inlet means comprise one or more vessels for temporary storage of portions of catalyst, which vessels are provided with valves at their inlet and outlet to overcome the pressure differential between the catalyst entry point and the reactor.

5. The reactor as claimed in any one of claims 1-4, characterized in that the catalyst outlet means comprise one or more vessels for temporary storage of portions of catalyst, which vessels are provided with valves at their inlet and outlet to overcome the pressure differential between the reactor and the catalyst exit point.

6. The reactor as claimed in any one of claims 1-5, characterized in that the inlet and outlet valves at the catalyst inlet and/or outlet are automatically controlled.

## Revendications

1. Un réacteur utilisable pour des réactions catalytiques exothermiques et endothermiques comprenant :
   (a) une calandre de réacteur fermée ;
   (b) dans cette calandre de réacteur, deux cylindres coaxiaux essentiellement verticaux délimitant un espace pour catalyseur , les parois de ces cylindres ayant une multiplicité d'ouvertures de dimensions suffisamment petites pour retenir le catalyseur dans cet espace, tout en permettant le passage du fluide à transformer ;
   (c) des moyens de transfert de chaleur consistant en un ou plusieurs tubes s'étendant dans l'espace pour catalyseur, dans lesquels on peut faire passer un fluide de transfert de chaleur ;
   (d) un ou plusieurs orifices d'entrée pour les corps en réaction et un ou plusieurs orifices de sortie pour l'effluent du réacteur, placés de manière que les corps en réaction passent substantiellement dans une direction radiale à travers l'espace pour catalyseur ;
   caractérisé en ce que la calandre du réacteur est pourvue aussi de moyens d'entrée et de sortie pour le catalyseur en communication avec les extrémités supérieure et inférieure de l'espace pour catalyseur, respectivement, permettant ainsi au catalyseur de se déplacer d'une manière continue à travers cet espace pour catalyseur durant le fonctionnement du réacteur, et les moyens de transfert de chaleur consistent en une ou plusieurs paires coaxiales d'un tube intérieur et d'un tube extérieur, qui à une extrémité sont reliés à une entrée et à une sortie pour un fluide de transfert de chaleur, respectivement, tandis qu'à l'autre extrémité le tube extérieur est fermé et le tube intérieur est ouvert et reste dégagé de l'extrémité fermée du tube extérieur.

2. Un réacteur selon la revendication 1, caractérisé en ce que les moyens d'entrée pour le catalyseur comprennent des moyens de distribution du catalyseur consistant en un certain nombre de tubes inclinés qui se ramifient à partir de l'entrée pour catalyseur du réacteur, ces tubes conduisant le catalyseur à différentes parties de la section transversale supérieure de l'espace pour catalyseur.

3. Un réacteur selon l'une quelconque des revendications 1-2, caractérisé en ce que les moyens de sortie pour le catalyseur comprennent des moyens de recueil du catalyseur consistant en un ou plusieurs godets coniques éventuellement combinés avec un certain nombre de tubes et un récipient de recueil placé près du fond de l'espace pour catalyseur.

4. Un réacteur selon l'une quelconque des revendications 1-3, caractérisé en ce que les moyens d'entrée pour le catalyseur comprennent un ou plusieurs récipients pour le stockage temporaire de portions du catalyseur, ces récipients étant pourvus de valves pour surmonter la différence de pression entre le point d'entrée du catalyseur et le réacteur.

5. Un réacteur selon l'une quelconque des revendications 1-4, caractérisé en ce que les moyens de sortie pour le catalyseur comprennent un ou plusieurs récipients pour le stockage temporaire de portions du catalyseur, ces récipients étant pourvus de valves d'entrée et de sortie pour surmonter la différence de pression entre le réacteur et le point de sortie du catalyseur.

6. Un réacteur selon l'une quelconque des revendications 1-5, caractérisé en ce que les valves d'entrée et de sortie à l'entrée et/ou à la sortie pour catalyseur sont commandées automatiquement.

**Ansprüche**

1. Ein für exotherme und endotherme katalytische Reaktionen geeigneter Reaktor, der umfaßt:

(a) ein geschlossenes Reaktorgehäuse;
(b) innerhalb dieses Reaktorgehäuses zwei koaxiale im wesentlichen vertikale Zylinder, die einen Katalysatorraum einschließen, wobei die Wände dieser Zylinder mehrere ausreichend klein bemessene Öffnungen aufweisen, so daß der Katalysator in dem Raum zurückgehalten wird, während der Durchgang des Prozeßfluids ermöglicht wird;
(c) Wärmeübertragungsmittel, bestehend aus einem oder mehreren Rohren, die sich in den Katalysatorraum erstrecken, durch die Wärmeübertragungsfluid geführt werden kann;
(d) eine oder mehrere Einlaßöffnungen für Reaktionspartner und eine oder mehrere Auslaßöffnungen für die aus dem Reaktor ausströmenden Produkte, so angeordnet, daß die Reaktionspartner im wesentlichen in einer radialen Richtung durch den Katalysatorraum strömen,
dadurch **gekennzeichnet**, daß das Reaktorgehäuse weiterhin mit Katalysatoreinlaß- und -auslaßmitteln versehen ist, die mit den oberen bzw. unteren Enden des Katalysatorraums in Verbindung stehen, so daß der Katalysator sich kontinuierlich durch den Katalysatorraum während des Betriebs des Reaktors bewegen kann und daß die Wärmeübertragungsmittel aus einem oder mehreren koaxialen Paaren eines inneren und eines äußeren Rohres bestehen, die an ihrem einen Ende an einen Einlaß bzw. Auslaß für Wärmeübertragungsfluid angeschlossen sind, während an ihrem anderen Ende das Außenrohr geschlossen und das Innenrohr offen und von dem geschlossenen Ende des Rohres entfernt ist.

2. Reaktor nach Anspruch 1,
dadurch **gekennzeichnet**, daß die Einlaßmittel für den Katalysator Verteilungsmittel für den Katalysator umfassen, die aus einer Anzahl geneigter Rohre bestehen, die von dem Katalysatoreinlaß des Reaktors abzweigen und die den Katalysator zu verschiedenen Teilen des oberen Querschnitts des Katalysatorraumes führen.

3. Reaktor nach einem der Ansprüche 1 bis 2,
dadurch **gekennzeichnet**, daß die Auslaßmittel für den Katalysator Mittel zum Sammeln des Katalysators umfassen, die aus einem oder mehreren konischen Aufnehmern bestehen, die gegebenenfalls mit einer Anzahl Rohre und einen in der Nähe des Bodens des Katalysatorraumes angeordneten Sammelbehälter kombiniert sind.

4. Reaktor nach einem der Ansprüche 1 bis 3, dadurch **gekennzeichnet**, daß die Einlaßmittel für den Katalysator einen oder mehrere Behälter für zeitweilige Lagerung von Katalysator-Teilmengen umfassen, die mit Ventilen an ihrem Einlaß und Auslaß versehen sind, um das Druckdifferential zwischen dem Katalysator-Einlaßpunkt und dem Reaktor zu überwinden.

5. Reaktor nach einem der Ansprüche 1 bis 4, dadurch **gekennzeichnet**, daß die Auslaßmittel für den Katalysator ein oder mehrere Gefäße für zeitweilige Lagerung von Katalysator-Teilmengen umfassen, die mit Ventilen an ihrem Einlaß und Auslaß versehen sind, um das Druckdifferential zwischen dem Reaktor und dem Katalysator-Auslaßpunkt zu überwinden.

6. Reaktor nach einem der Ansprüche 1 bis 5, dadurch **gekennzeichnet**, daß die Einlaß- und Auslaßventile am Katalysatoreinlaß und/oder -auslaß automatisch gesteuert werden.

FIG.1

FIG.2